# EUROPÄISCHE PATENTSCHRIFT

(11) **EP 3 337 641 B1**
(45) Veröffentlichungstag und Bekanntmachung des Hinweises auf die Patenterteilung: **16.02.2022**
(21) Anmeldenummer: 16756578.7
(22) Anmeldetag: 04.08.2016
(51) Int. Cl.: B23Q 11/08, B23Q 1/00, B23Q 7/14, B23Q 7/03, B23Q 37/00, B23Q 41/04, B23Q 7/00

(54) **MONTAGE- ODER BEARBEITUNGSMASCHINE, DAMIT GEBILDETE FERTIGUNGSSTRASSE SOWIE FERTIGUNGSANLAGE**
ASSEMBLY OR PROCESSING MACHINE, PRODUCTION LINE FORMED THEREBY AND PRODUCTION PLANT
MACHINE DE MONTAGE OU D'USINAGE, LIGNE DE PRODUCTION FORMÉE AVEC CETTE DERNIÈRE, AINSI QU'INSTALLATION DE PRODUCTION

(30) Priorität: 17.08.2015 DE 102015215625
(43) Veröffentlichungstag der Anmeldung: 27.06.2018
(73) Patentinhaber: Schaeffler Technologies AG & Co. KG, 91074 Herzogenaurach (DE)
(72) Erfinder: SCHNABEL, Wolfgang, 91086 Aurachtal (DE); STERZINGER, Benno, 97618 Rödelmaier (DE); SCHOLTZ, Detlef, 97437 Hassfurt (DE); LUTZ, Martin, 97531 Untertheres (DE); SCHMITT, Thomas, 96528 Schalkau (DE)
(86) Internationale Anmeldenummer: PCT/DE2016/200359
(87) Internationale Veröffentlichungsnummer: WO 2017/028853

(56) Entgegenhaltungen:
- EP-A1- 1 932 618
- EP-A2- 1 413 394
- WO-A1-2015/056339
- DE-A1-102011 053 538
- DE-A1-102012 017 027
- DE-U1-202006 013 570
- JP-A- 2006 026 777
- JP-A- 2010 052 088
- US-A1- 2005 034 960
- US-A1- 2014 013 591

## Beschreibung

Die Erfindung betrifft eine Montage- und/oder Bearbeitungsmaschine, umfassend einen Arbeitsraum zur Montage- und/oder Bearbeitung mindestens eines Bauteils, mindestens eine Transporteinrichtung zum Transport des mindestens einen Bauteils in den Arbeitsraum, eine zumindest in Teilen bewegliche Schutzeinhausung zur temporären Abschirmung des Arbeitsraums während der Montage- und/oder Bearbeitung des mindestens eines Bauteils im Arbeitsraum, wobei die Schutzeinhausung mindestens ein Sichtfenster umfasst, das bei geschlossener Schutzeinhausung eine Beobachtung der Montage- und/oder Bearbeitung des mindestens eines Bauteils im Arbeitsraum ermöglicht, und mindestens eine Bedien- und Anzeigeeinheit.

Derartige Montage- und/oder Bearbeitungsmaschinen sind bereits hinreichend bekannt. So zeigt die DE 202012001579 U1 eine Bearbeitungsmaschine in Form einer Reinigungsanlage für Wellen, bei der ein, an einem beweglichen Arm befestigtes Bedienpanel als Steuereinheit dient. Als Transporteinrichtung zum Einbringen des zu reinigenden bzw. zu bearbeitenden Bauteils ist ein manuell geführtes Handlingsystem beschrieben.

DE 10 2012 017027 A1 offenbart eine Bearbeitungsmaschine nach dem Oberbegriff des Anspruchs 1, umfassend eine Transporteinrichtung zum Transport eines Bauteils in den Arbeitsraum, eine bewegliche Schutzeinhausung die ein Sichtfenster umfasst, und eine Bedien- und Anzeigeeinheit, die an einem beweglichen Teil der Schutzeinhausung angeordnet und mit diesem zusammen bewegbar ist.

EP 1 932 618 A1 offenbart eine Bearbeitungsmaschine mit einem Sichtfenster und einer Bedien- und Anzeigeeinheit, die in einem beweglichen Teil einer Schutzeinhausung angeordnet sind und mit diesem zusammen bewegbar sind.

Weiterhin sind auch Montage- und/oder Bearbeitungsmaschinen bekannt, bei denen separate Beistellschränke oder - einheiten vorhanden sind, in welche Bedien- und Anzeigeeinheiten für die Montage- und/oder Bearbeitungsmaschine integriert sind.

Um ein Bauteil nacheinander unterschiedlichen Montage- und/oder Bearbeitungsmaschinen zuzuführen, werden diese Montage- und/oder Bearbeitungsmaschinen zunehmend miteinander verkettet. Eine solche Verkettung beinhaltet dabei üblicherweise, dass Transporteinrichtungen das Bauteil den unterschiedlichen Montage- und/oder Bearbeitungsmaschinen nacheinander zuführen, wobei im Hinblick auf den Zeitbedarf für den Transport und den Platzbedarf der zu einer Fertigungsstraße verketteten Montage- und/oder Bearbeitungsmaschinen eine möglichst enge Anordnung bevorzugt ist.

Dabei werden die Montage- und/oder Bearbeitungsmaschinen räumlich möglichst nahe zusammengerückt und damit die Transportwege kurz gehalten. Dabei erweisen sich die bekannten Bedien- und Anzeigeeinheiten oft als störend, da diese entweder einen eigenen Platzbedarf haben oder sich bei der Verkettung der Montage- und/oder Bearbeitungsmaschinen als schwer in das Gesamtkonzept einer Fertigungsstraße integrierbar erweisen.

Es ist daher Aufgabe der Erfindung, eine Montage- und/oder Bearbeitungsmaschine mit einer Bedien- und Anzeigeeinheit bereitzustellen, die sich optimal in eine Fertigungsstraße integrieren lässt. Weiterhin ist es Aufgabe der Erfindung, eine Fertigungsstraße und eine Fertigungsanlage mit derartigen Montage- und/oder Bearbeitungsmaschinen mit reduziertem Platzbedarf anzugeben.

Die Aufgabe wird mit den Merkmalen des Anspruchs 1 gelöst.

Eine derartige Anordnung einer Bedien- und Anzeigeeinheit ist besonders vorteilhaft, da diese keinen eigenen Platz benötigt und bei der Verkettung von mehreren Montage- und/oder Bearbeitungsmaschinen nicht hinderlich ist. Eine Integration der Bedienund Anzeigeeinheit in die Schutzeinhausung, insbesondere in einen beweglichen Teil der Schutzeinhausung ist dabei nicht trivial, da die Bedien- und Anzeigeeinheit sich mit dem beweglichen Teil mit bewegen muss und gleichzeitig die volle Funktionsfähigkeit der Schutzeinhausung, welche die Sicherheit des Bedienpersonals gewährleistet, und weiterhin der Bedien- und Anzeigeeinheit im Dauerbetrieb sichergestellt sein muss.

Besonders bevorzugt ist es dabei, wenn die mindestens eine Bedien- und Anzeigeeinheit nicht nur bei geschlossener Schutzeinhausung, sondern auch bei geöffneter Schutzeinhausung voll funktionsfähig ist. Dies erleichtert die Durchführung von Rüstund Einrichtarbeiten, aber auch von Wartungs- und Reparaturmaßnahmen. Es ergibt sich eine hohe Flexibilität der Montage- und/oder Bearbeitungsmaschine, wodurch auch kleine Losgrößen wirtschaftlich fertigbar sind.

Der bewegliche Teil der Schutzeinhausung, an welchem die Bedien- und Anzeigeeinheit angeordnet ist, ist verschiebbar. Eine solche Schiebe- oder Schiebe-Schwenk-Bewegung ist besonders platzsparend realisierbar.

Sofern die Montage- und/oder Bearbeitungsmaschine eine Bearbeitungsmaschine ist, so ist diese bevorzugt eingerichtet, ein Umformen, Trennen, Fügen, Beschichten oder eine Stoffänderung am Bauteil durchzuführen. Aber auch ein Waschen, Entstauben, Demagnetisieren und dergleichen ist im Sinne der vorliegenden Erfindung als eine Bearbeitung des mindestens einen Bauteils anzusehen.

Die Bearbeitungsmaschine umfasst dabei vorzugsweise mindestens eine der nachfolgenden Einheiten: eine Schleifmaschine, eine Honmaschine, eine Fräsmaschine, eine Drehmaschine, eine Läppmaschine, eine Bohrmaschine, eine Stanzeinheit, eine Presseneinheit, eine Wärmebehandlungseinheit, eine Reinigungseinheit, eine Trocknungseinheit, eine Demagnetisierungseinheit.

Eine Montage- und/oder Bearbeitungsmaschine umfasst vorzugsweise weiterhin mindestens eine automatische Zuführeinheit und/oder mindestens eine automatische Verpackungseinheit und/oder mindestens eine automatische Mess - und Regelungseinheit.

Die mindestens eine Transporteinrichtung umfasst mindestens ein Förderband, das zum Transport des mindestens einen Bauteils in einer horizontalen Ebene in den Arbeitsraum und aus dem Arbeitsraum heraus in einer Transportrichtung eingerichtet ist. Dadurch wird eine automatische Be- und Entladung der Montage- und/oder Bearbeitungsmaschine ermöglicht und deren Verkettung in Transportrichtung des Bauteils unterstützt.

Dabei ermöglicht ein und dieselbe Montage- und/oder Bearbeitungsmaschine insbesondere sowohl einen Transport von rechts nach links durch diese hindurch wie auch umgekehrt. Dies ist insbesondere von Vorteil, wenn mehrere Montage- und/oder Bearbeitungsmaschinen mit ihren Bedien- und Anzeigeeinheiten zueinander zeigend in parallel aufgestellten Fertigungsstraßen angeordnet werden, da die gleiche Materialflussrichtung in den Fertigungsstraßen möglich ist.

Der bewegliche Teil der Schutzeinhausung ist dabei mit der Bedien- und Anzeigeeinheit parallel zu einer Längsachse des Förderbands verschiebbar. Dies hält den Raum vor der Montage- und/oder Bearbeitungsmaschine dauerhaft frei und macht diesen für Bedienpersonal und Gabelstaplerverkehr durchgehend nutzbar.

Die Bedien- und Anzeigeeinheit ist bevorzugt in Höhe des Arbeitsraums angeordnet. Insbesondere ist dabei eine Anordnung gewählt, bei der eine vor der Montage- und/oder Bearbeitungsmaschine stehende Bedienperson die Bedien- und Anzeigeeinheit bequem ablesen und bedienen kann. Dazu hat sich eine Anordnung der Bedien- und Anzeigeeinheit (ausgehend von deren Mitte) in einer Höhe im Bereich von etwa 1,5 bis 1,7 m, insbesondere von 1,6 m, bewährt.

Die Aufgabe wird weiterhin für eine Fertigungsstraße umfassend mindestens zwei miteinander verkettete erfindungsgemäße Montage- und/oder Bearbeitungsmaschinen dadurch gelöst, dass die Bedien- und Anzeigeeinheiten der verketteten Montage- und/oder Bearbeitungsmaschinen in einer senkrechten Ebene angeordnet sind, dass eine erste Transporteinrichtung einer ersten Montage- und/oder Bearbeitungsmaschine ein erstes Förderband umfasst, dass eine zweite Transporteinrichtung einer zweiten Montage- und/oder Bearbeitungsmaschine ein zweites Förderband umfasst, und dass das erste Förderband und das zweite Förderband aneinander anschließen und zum Transport des mindestens einen Bauteils in einer horizontalen Ebene eingerichtet sind.

Die einheitliche Ausrichtung der Bedien- und Anzeigeeinheiten aller Montage- und/oder Bearbeitungsmaschinen und die direkte Übergabe des zu bearbeitenden Bauteils von einer Montage- und/oder Bearbeitungsmaschine zur nachfolgenden, damit verketteten Montage- und/oder Bearbeitungsmaschine mittels Förderbändern ermöglicht die Realisierung einer Fertigungsstraße mit äußerst geringem Platzbedarf und dabei besonders einfacher Bedienbarkeit bereits durch eine einzelne Bedienperson. Dadurch wird die Durchlaufzeit des Bauteils durch die Fertigungsstraße und weiterhin die Kosten für das Bedienpersonal minimiert. Zudem verringern sich die Investitionskosten für die Verkettung als solche. Eine Störungsbeseitigung an einer derart aufgebauten Fertigungsstraße ist vereinfacht und deren technische Verfügbarkeit signifikant erhöht.

Die Aufgabe wird weiterhin für eine Fertigungsanlage umfassend mindestens zwei erfindungsgemäße Fertigungsstraßen sowie mindestens eine Bediengasse dadurch gelöst, dass beiderseits einer jeden Bediengasse je eine Fertigungsstraße angeordnet ist, wobei in einer senkrechten ersten Ebene angeordnete erste Bedien- und Anzeigeeinheiten einer ersten Fertigungsstraße und in einer senkrechten weiteren Ebene angeordnete weitere Bedien- und Anzeigeeinheiten einer zweiten Fertigungsstraße zueinander zeigend angeordnet sind.

Durch eine derartige Anordnung der Fertigungsstraßen ist eine weitere Reduktion der Personalkosten erzielbar, da eine einzelne Bedienperson in einer Bediengasse gleichzeitig zwei Fertigungsstraßen betreuen kann. Unter einer "Bediengasse" wird dabei ein langgestreckter, freier Platz bzw. ein Geh- oder Fahrweg zwischen den Fertigungsstraßen verstanden.

Dabei weist eine jede Bediengasse bevorzugt eine Breite im Bereich von 0,75 bis 1,5 m, insbesondere von 1,2 m, auf. Die Breite bezeichnet dabei den Abstand zwischen den sich gegenüber stehenden beiden Fertigungsstraßen.

Die Figuren 1 bis 5 sollen erfindungsgemäße Montage- und/oder Bearbeitungsmaschinen und damit gebildete Fertigungsstraßen sowie Fertigungsanlagen beispielhaft erläutern. So zeigt:
- FIG 1: eine erste erfindungsgemäße Montage- und/oder Bearbeitungsmaschine mit geschlossener Schutzeinhausung;
- FIG 2: die erste erfindungsgemäße Montage- und/oder Bearbeitungsmaschine gemäß FIG 1mit geöffneter Schutzeinhausung;
- FIG 3: eine zweite erfindungsgemäße Montage- und/oder Bearbeitungsmaschine mit geschlossener Schutzeinhausung;
- FIG 4: eine Fertigungsstraße umfassend drei Montage- und/oder Bearbeitungsmaschinen gemäß FIG 3; und
- FIG 5: eine Fertigungsanlage umfassend zwei Fertigungsstraßen gemäß FIG 4.

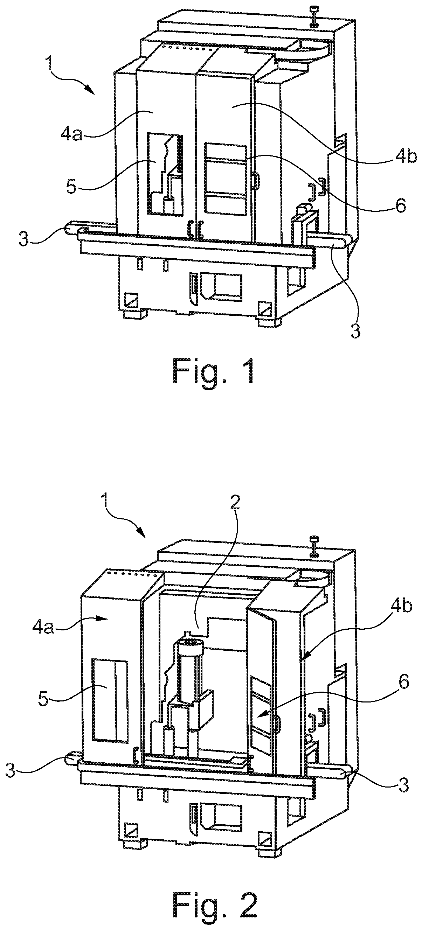

FIG 1 zeigt eine erste erfindungsgemäße Montage- und/oder Bearbeitungsmaschine 1 mit geschlossener Schutzeinhausung 4a, 4b in dreidimensionaler Ansicht. Die Montage- und/oder Bearbeitungsmaschine 1 umfasst einen Arbeitsraum 2 (vergleiche FIG 2) zur Montage- und/oder Bearbeitung von Bauteilen, die mittels einer Transporteinrichtung 3 in Form eines Förderbandes in den Arbeitsraum 2 transportiert werden. Dabei ist es hier möglich, die Bauteile von rechts nach links oder von links nach rechts durch die Montage- und/oder Bearbeitungsmaschine 1 zu transportieren. Die Montage- und/oder Bearbeitungsmaschine 1 umfasst weiterhin eine zweiteilige bewegliche Schutzeinhausung 4a, 4b zur temporären Abschirmung des Arbeitsraums 2 während der Montage- und/oder Bearbeitung der Bauteile im Arbeitsraum 2. Hier sind beide Teile der Schutzeinhausung 4a, 4b beweglich ausgebildet, wobei beide Teile parallel zum Förderband verschiebbar, gegebenenfalls zudem geringfügig verschwenkbar sind.

Die Schutzeinhausung 4a, 4b umfasst ein Sichtfenster 5, das bei geschlossener Schutzeinhausung 4a, 4b eine Beobachtung der Montage- und/oder Bearbeitung der Bauteile im Arbeitsraum 2 ermöglicht. Weiterhin ist eine Bedien- und Anzeigeeinheit 6 vorhanden, die an einem der beweglichen Teile der Schutzeinhausung 4a, 4b angeordnet und mit diesem zusammen bewegbar ist.

FIG 2 zeigt nun die erste erfindungsgemäße Montage- und/oder Bearbeitungsmaschine gemäß FIG 1mit geöffneter Schutzeinhausung 4a, 4b in dreidimensionaler Ansicht. Gleiche Bezugszeichen wie in FIG 1 kennzeichnen gleiche Elemente. Durch die seitliche Verschiebung der Teile der Schutzeinhausung 4a, 4b ist hier der Blick in den Arbeitsraum 2 und auf die den Arbeitsraum 2 durchquerende Transporteinrichtung 3 frei. Dabei werden die beiden beweglichen Teile der Schutzeinhausung 4a, 4b beim Öffnen voneinander weg bewegt und beim Schließen aufeinander zu bewegt. Die Bedien- und Anzeigeeinheit 6 ist sowohl bei geschlossener wie auch geöffneter Schutzeinhausung 4a, 4b, weiterhin auch während des Öffnens und Schließens der Schutzeinhausung 4a, 4b voll funktionsfähig.

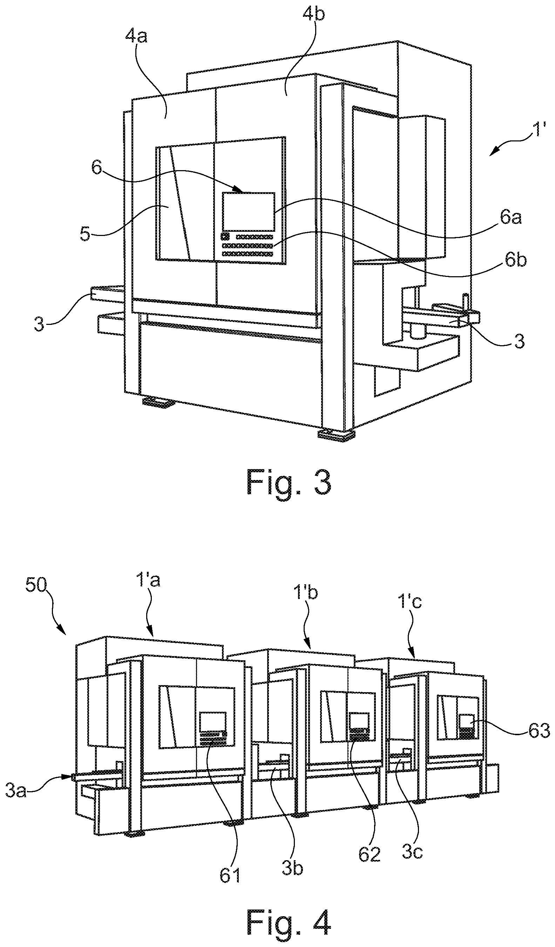

FIG 3 zeigt eine zweite erfindungsgemäße Montage- und/oder Bearbeitungsmaschine 1' mit geschlossener Schutzeinhausung 4a, 4b. Die Teile der Schutzeinhausung 4a, 4b sind parallel zur Längsachse des Förderbands der Transporteinrichtung 3 verschiebbar, um den Arbeitsraum 2 (vergleiche FIG 2) zu öffnen oder zu schließen. Gleiche Bezugszeichen wie in den Figuren 1 und 2 kennzeichnen gleiche Elemente. Die Bedien- und Anzeigeeinheit 6 ist hier detaillierter dargestellt, wobei eine Anzeigeeinheit 6a und eine Bedieneinheit 6b in Form eines Tastaturelements erkennbar sind. Alternativ kann auch eine Touchscreen-Einheit, die die Anzeigeeinheit und Bedieneinheit in sich vereint, vorhanden sein.

FIG 4 zeigt eine Fertigungsstraße 50 in dreidimensionaler Ansicht umfassend drei miteinander verkettete Montage- und/oder Bearbeitungsmaschinen 1á, 1'b, 1'c gemäß FIG 3. Die Bedien- und Anzeigeeinheiten 61,62,63 der verketteten Montage- und/oder Bearbeitungsmaschinen 1á, 1 'b, 1 'c sind dabei in einer senkrechten Ebene angeordnet. Eine erste Transporteinrichtung 3a einer ersten Montage- und/oder Bearbeitungsmaschine 1'a umfasst ein erstes Förderband. Eine zweite Transporteinrichtung 3b einer zweiten Montage- und/oder Bearbeitungsmaschine 1 'b umfasst ein zweites Förderband. Eine dritte Transporteinrichtung 3c einer dritten Montage- und/oder Bearbeitungsmaschine 1 'c umfasst ein drittes Förderband. Das erste, das zweite und das dritte Förderband schließen aneinander an und sind zum Transport der zu bearbeitenden Bauteils in einer horizontalen Ebene durch die Fertigungsstraße eingerichtet.

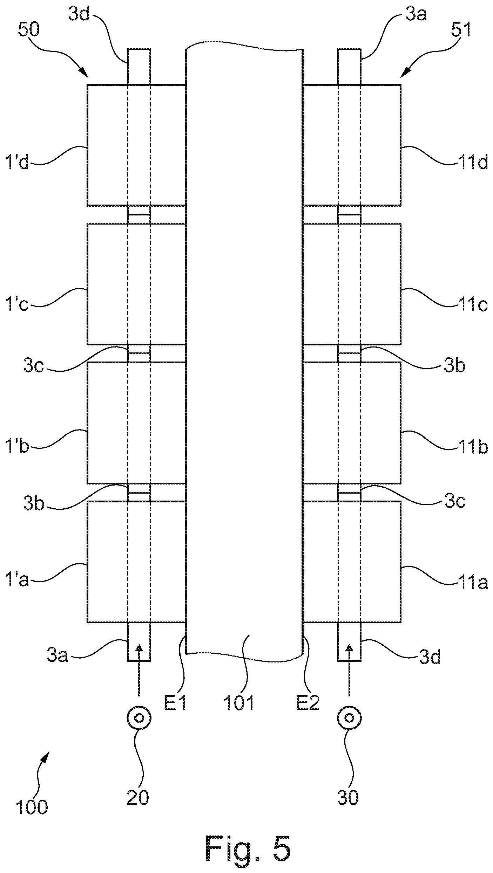

FIG 5 eine schematische Darstellung einer Fertigungsanlage 100 umfassend zwei Fertigungsstraßen 50, 51 in der Draufsicht. Gleiche Bezugszeichen wie in FIG 4 kennzeichnen gleiche Elemente. Die beiden Fertigungsstraßen 50, 51 sind rechts und links entlang einer Bediengasse 101 angeordnet. In einer senkrechten ersten Ebene E1 sind die Bedien- und Anzeigeeinheiten 61, 62, 63 usw. der ersten Fertigungsstraße 50 angeordnet (vergleiche FIG 4). In einer senkrechten weiteren Ebene E2 sind die Bedien- und Anzeigeeinheiten 61, 62, 63, usw. der zweiten Fertigungsstraße 51 angeordnet (vergleiche nochmals FIG 4). Dabei sind die Bedien- und Anzeigeeinheiten 61, 62, 63, usw. der beiden Fertigungsstraßen 50, 51 zueinander zeigend angeordnet. Eine sich in der Bediengasse 101 befindende Person kann gleichzeitig beide Fertigungsstraßen 50, 51 im Blick behalten und gegebenenfalls über die Bedien- und Anzeigeeinheiten 61, 62, 63, usw. in deren Steuerung eingreifen. Weiterhin sind hier beispielhaft zu bearbeitende Bauteile 20, 30 in Form von Wälzlagerringen dargestellt, die in Pfeilrichtung durch die jeweilige Fertigungsstraße 50, 51 transportiert werden. Dabei ist hier beispielsweise die Montage- und/oder Bearbeitungsmaschine 1'a, 11a eine Vertikalschleifmaschine, die Montage- und/oder Bearbeitungsmaschine 1'b, 11b eine Demagnetisierungseinheit, die Montage- und/oder Bearbeitungsmaschine 1'c, 11c eine Wascheinheit und die Montage- und/oder Bearbeitungsmaschine 1'd, 11d eine Vertikalhonmaschine, welchen die Bauteile 20, 30 nacheinander zur Bearbeitung zugeführt werden.

Es können dabei beliebig viele Montage- und/oder Bearbeitungsmaschinen miteinander verkettet sein und dabei unterschiedliche und/oder gleiche Montage- und/oder Bearbeitungsmaschinen in einer einzelnen Fertigungsstraße vorhanden sein. Auch ist es nicht notwendig, dass beide von der Bediengasse aus bedienbaren Fertigungsstraßen in Transportrichtung der Bauteile gesehen gleich ausgebildet sind bzw. dass gleiche oder ähnliche Bauteile durch die beiden Fertigungsstraßen bearbeitet werden. Sofern mehrere Bediengassen vorhanden sind, sind diese vorzugsweise parallel ausgerichtet, wobei beispielsweise zwei Fertigungsanlagen gemäß FIG 5 nebeneinander angeordnet sind. Dabei würden die, der Bediengasse 101 abgewandten Seiten der Montage- und/oder Bearbeitungsmaschinen jeweils vorzugsweise an die, der weiteren parallelen Bediengasse abgewandten Seiten von Montage- und/oder Bearbeitungsmaschinen angrenzen, welche dieser weiteren Bediengasse zugeordnet sind.

### Bezugszeichenliste

- 1,1',1'a,1'b,1'c,1'd, 11a,11b,11c,11d: Montage- und/oder Bearbeitungsmaschine
- 2: Arbeitsraum
- 3,3a,3b,3c,3d: Transporteinrichtung
- 4a, 4b: Schutzeinhausung
- 5: Sichtfenster
- 6,61,62,63: Bedien- und Anzeigeeinheit
- 6a: Anzeigeeinheit
- 6b: Bedieneinheit
- 20,30: Bauteil
- 50,51: Fertigungsstraße
- 100: Fertigungsanlage
- 101: Bediengasse

## Patentansprüche

1. Montage- und/oder Bearbeitungsmaschine (1,1',1'a, 1'b, 1'c, 1' d,11a,11b,11c,11d) umfassend
- einen Arbeitsraum (2) zur Montage- und/oder Bearbeitung mindestens eines Bauteils (20, 30),
- mindestens eine Transporteinrichtung (3) zum Transport des mindestens einen Bauteils (20, 30) in den Arbeitsraum (2), wobei die mindestens eine Transporteinrichtung (3) mindestens ein Förderband umfasst, das zum Transport des mindestens einen Bauteils (20,30) in einer horizontalen Ebene in den Arbeitsraum (2) und aus dem Arbeitsraum (2) heraus in einer Transportrichtung eingerichtet ist,
- eine zumindest in Teilen bewegliche Schutzeinhausung (4a,4b) zur temporären Abschirmung des Arbeitsraums (2) während der Montage- und/oder Bearbeitung des mindestens eines Bauteils (20,30) im Arbeitsraum (2), wobei die Schutzeinhausung (4a,4b) mindestens ein Sichtfenster (5) umfasst, das bei geschlossener Schutzeinhausung (4a,4b) eine Beobachtung der Montage- und/oder Bearbeitung des mindestens eines Bauteils (20,30) im Arbeitsraum (2) ermöglicht, und
- mindestens eine Bedien- und Anzeigeeinheit (6,61,62,63),
wobei die mindestens eine Bedien- und Anzeigeeinheit (6,61,62,63) an einem beweglichen Teil der Schutzeinhausung (4a,4b) angeordnet und mit diesem zusammen bewegbar ist,
**dadurch gekennzeichnet, dass** der bewegliche Teil der Schutzeinhausung (4a,4b) mit der Bedien- und Anzeigeeinheit (6,61,62,63) parallel zu einer Längsachse des Förderbands verschiebbar ist.

2. Montage- und/oder Bearbeitungsmaschine nach Anspruch 1, **dadurch gekennzeichnet, dass** die mindestens eine Bedien- und Anzeigeeinheit (6,61,62,63) sowohl bei geschlossener Schutzeinhausung (4a,4b) wie auch geöffneter Schutzeinhausung (4a,4b) funktionsfähig ist.

3. Montage- und/oder Bearbeitungsmaschine nach einem der Ansprüche 1 oder 2, **dadurch gekennzeichnet, dass** der bewegliche Teil der Schutzeinhausung (4a,4b) schwenk- und verschiebbar ist.

4. Montage- und/oder Bearbeitungsmaschine nach einem der Ansprüche 1 bis 3, **dadurch gekennzeichnet, dass** die Bearbeitungsmaschine (1,1',1'a,1'b,1'c,1'd, 11a,11b,11c,11d) eingerichtet ist, ein Umformen, Trennen, Fügen, Beschichten oder eine Stoffänderung am Bauteil (20,30) durchzuführen.

5. Montage- und/oder Bearbeitungsmaschine nach einem der Ansprüche 1 bis 4, **dadurch gekennzeichnet, dass** die Bearbeitungsmaschine (1,1',1'a, 1'b, 1'c, 1'd, 11a, 11b, 11c,11d) mindestens eine der nachfolgenden Einheiten umfasst: eine Schleifmaschine, eine Honmaschine, eine Fräsmaschine, eine Drehmaschine, eine Läppmaschine, eine Bohrmaschine, eine Stanzeinheit, eine Presseneinheit, eine Wärmebehandlungseinheit, eine Reinigungseinheit, eine Trocknungseinheit, eine Demagneti-sierungseinheit, eine automatische Mess- und Regelungseinheit, eine automatische Zuführeinheit, eine automatische Verpackungseinheit.

6. Montage- und/oder Bearbeitungsmaschine nach einem der Ansprüche 1 bis 5, **dadurch gekennzeichnet, dass** die Bedien- und Anzeigeeinheit (6,61,62,63) in Höhe des Arbeitsraums (2) angeordnet ist.

7. Fertigungsstraße(50,51) umfassend mindestens zwei miteinander verkettete Montage- und/oder Bearbeitungsmaschinen (1'a,1'b,1'c,1'd;11a,11b,11c,11d) nach einem der Ansprüche 1 bis 6, **dadurch gekennzeichnet, dass** die Bedien- und Anzeigeeinheiten (6,61,62,63) der verketteten Montage- und/oder Bearbeitungsmaschinen (1'a,1'b,1'c,1'd;11a,11b,11c,11d) in einer senkrechten Ebene (E1, E2) angeordnet sind, dass eine erste Transporteinrichtung (3a, 3d) einer ersten Montage- und/oder Bearbeitungsmaschine (1'a, 11a) ein erstes Förderband umfasst, dass eine zweite Transporteinrichtung (3b, 3c) einer zweiten Montage- und/oder Bearbeitungsmaschine (1'b, 11b) ein zweites Förderband umfasst, und dass das erste Förderband und das zweite Förderband aneinander anschließen und zum Transport des mindestens einen Bauteils (20,30) in einer horizontalen Ebene eingerichtet sind.

8. Fertigungsanlage (100) umfassend mindestens zwei Fertigungsstraßen (50, 51) gemäß Anspruch 7 sowie mindestens eine Bediengasse (101), wobei beiderseits einer jeden Bediengasse (101) je eine Fertigungsstraße (50,51) angeordnet ist, und wobei in einer senkrechten ersten Ebene (E1) angeordnete erste Bedien- und Anzeigeeinheiten (61,62,63) einer ersten Fertigungsstraße (50) und in einer senkrechten weiteren Ebene (E2) angeordnete weitere Bedien- und Anzeigeeinheiten (61,62,63) einer zweiten Fertigungsstraße (51) zueinander zeigend angeordnet sind.

9. Fertigungsanlage gemäß Anspruch 8, **dadurch gekennzeichnet**, das eine jede Bediengasse (101) eine Breite im Bereich von 0,75 bis 1,5 m aufweist.

## Claims

1. An assembly and/or processing machine (1, 1', 1'a, 1'b, 1'c, 1'd, 11a, 11b, 11c, 11d) comprising
- a working chamber (2) for assembling and/or processing at least one component (20, 30),
- at least one transport device (3) for transporting the at least one component (20, 30) into the working chamber (2), wherein the at least one transport device (3) comprises at least one conveyor belt that is designed to transport the at least one component (20, 30) in a horizontal plane into the working chamber (2) and out of the working chamber (2) in a transport direction,
- a protective housing (4a, 4b), which is movable at least in parts, for temporarily shielding the working chamber (2) during the assembling and/or processing of the at least one component (20, 30) in the working chamber (2), wherein the protective housing (4a, 4b) comprises at least one viewing window (5) which, when the protective housing (4a, 4b) is closed, makes it possible to observe the assembling and/or processing of the at least one component (20, 30) in the working chamber (2), and
- at least one operating and display unit (6, 61, 62, 63), wherein the at least one operating and display unit (6, 61, 62, 63) is arranged on a movable part of the protective housing (4a, 4b) and can be moved together therewith, **characterised in that** the movable part of the protective housing (4a, 4b) with the operating and display unit (6, 61, 62, 63) can be displaced parallel to a longitudinal axis of the conveyor belt.

2. The assembly and/or processing machine according to claim 1, **characterised in that** the at least one operating and display unit (6, 61, 62, 63) is functional both when the protective housing (4a, 4b) is closed and when the protective housing (4a, 4b) is open.

3. The assembly and/or processing machine according to one of claims 1 or 2, **characterised in that** the movable part of the protective housing (4a, 4b) is pivotable and displaceable.

4. The assembly and/or processing machine according to one of claims 1 to 3, **characterised in that** the processing machine (1, 1', 1'a, 1'b, 1'c, 1'd, 11a, 11b, 11c, 11d)is designed to perform a forming, separating, joining, coating or a material alteration on the component (20, 30).

5. The assembly and/or processing machine according to one of claims 1 to 4, **characterised in that** the processing machine (1, 1', 1'a, 1'b, 1'c, 1'd, 11a, 11b, 11c, 11d)comprises at least one of the following units: a grinding machine, a honing machine, a milling machine, a lathe, a lapping machine, a drilling machine, a punching unit, a press unit, a heat treatment unit, a cleaning unit, a drying unit, a demagnetisation unit, an automatic measurement and regulation unit, an automatic feed unit and an automatic packing unit.

6. The assembly and/or processing machine according to one of claims 1 to 5, **characterised in that** the operating and display unit (6, 61, 62, 63) is arranged at the level of the working chamber (2).

7. A production line (50, 51) comprising at least two interlinked assembly and/or processing machines (1'a, 1'b, 1'c, I'd; 11a, 11b, 11c, 11d)according to one of claims 1 to 6, **characterised in that** the operating and display units (6, 61, 62, 63) of the interlinked assembly and/or processing machines (1'a, 1'b, 1'c, I'd; 11a, 11b, 11c, 11d)are arranged in a vertical plane (E1, E2), **in that** a first transport device (3a, 3d) of a first assembly and/or processing machine (1'a, 11a) comprises a first conveyor belt, **in that** a second transport device (3b, 3c) of a second assembly and/or processing machine (1'b, 11b) comprises a second conveyor belt, and **in that** the first conveyor belt and the second conveyor belt connect to one another and are designed to transport the at least one component (20, 30) in a horizontal plane.

8. A production facility (100) comprising at least two production lines (50, 51) according to claim 7 and at least one operating aisle (101), wherein a production line (50, 51) is arranged on both sides of each operating aisle (101), and wherein first operating and display units (61, 62, 63) of a first production line (50) are arranged in a vertical first plane (E1) and further operating and display units (61, 62, 63), arranged in a vertical further plane (E2), of a second production line (51) are arranged facing one another.

9. The production facility according to claim 8, **characterised in that** each operating aisle (101) has a width in the range from 0.75 to 1.5 m.

## Revendications

1. Machine de montage et/ou d'usinage (1,1', 1'a, 1'b, 1'c, 1'd, 11a, 11b, 11c, 11d) comprenant
- un espace de travail (2) pour le montage et/ou l'usinage d'au moins une pièce (20, 30),
- au moins un dispositif de transport (3) pour transporter l'au moins une pièce (20, 30) dans l'espace de travail (2), l'au moins un dispositif de transport (3) comprenant au moins une bande transporteuse qui est conçue pour transporter l'au moins une pièce (20, 30) dans un plan horizontal dans l'espace de travail (2) et hors de l'espace de travail (2) dans un sens de transport,
- une enceinte de protection (4a, 4b) mobile au moins en partie, pour protéger temporairement l'espace de travail (2) pendant le montage et/ou l'usinage de l'au moins une pièce (20, 30) dans l'espace de travail (2), l'enceinte de protection (4a, 4b) comprenant au moins une fenêtre de visualisation (5) qui, lorsque l'enceinte de protection (4a, 4b) est fermée, permet l'observation du montage et/ou de l'usinage de l'au moins une pièce (20, 30) dans l'espace de travail (2) et
- au moins une unité de commande et d'affichage (6, 61, 62, 63), l'au moins une unité de commande et d'affichage (6, 61, 62, 63) étant disposée sur une partie mobile de l'enceinte de protection (4a, 4b) et pouvant être déplacée avec elle, **caractérisée en ce que** la partie mobile de l'enceinte de protection (4a, 4b) peut être déplacée avec l'unité de commande et d'affichage (6, 61, 62, 63) parallèlement à un axe longitudinal de la bande transporteuse.

2. Machine de montage et/ou d'usinage selon la revendication 1, **caractérisée en ce que** l'au moins une unité de commande et d'affichage (6, 61, 62, 63) est apte à fonctionner aussi bien quand l'enceinte de protection (4a, 4b) est fermée que quand l'enceinte de protection (4a, 4b) est ouverte.

3. Machine de montage et/ou d'usinage selon l'une quelconque des revendications 1 ou 2, **caractérisée en ce que** la partie mobile de l'enceinte de protection (4a, 4b) peut pivoter et se déplacer.

4. Machine de montage et/ou d'usinage selon l'une quelconque des revendications 1 à 3, **caractérisée en ce que** la machine d'usinage (1, 1', 1'a, 1'b, 1'c, 1'd, 11a, 11b, 11c, 11d) est conçue pour effectuer un formage, une séparation, un assemblage, un revêtement ou un changement de matière sur la pièce (20, 30).

5. Machine de montage et/ou d'usinage selon l'une quelconque des revendications 1 à 4, **caractérisée en ce que** la machine d'usinage (1, 1', 1'a, 1'b, 1'c, 1'd, 11a, 11b, 11c, 11d) comprend au moins l'une des unités suivantes : une rectifieuse, une machine à pierrer, une fraiseuse, un tour, une machine à roder, une perceuse, une unité de poinçonnage, une unité de presse, une unité de traitement thermique, une unité de nettoyage, une unité de séchage, une unité de démagnétisation, une unité de mesure et de régulation automatique, une unité d'alimentation automatique, une unité d'emballage automatique.

6. Machine de montage et/ou d'usinage selon l'une quelconque des revendications 1 à 5, **caractérisée en ce que** l'unité de commande et d'affichage (6, 61, 62, 63) est disposée à hauteur de l'espace de travail (2).

7. Ligne de production (50, 51) comprenant au moins deux machines de montage et/ou d'usinage (1'a, 1'b, 1'c, 1'd ; 11a, 11b, 11c, 11d) interconnectées selon l'une quelconque des revendications 1 à 6, **caractérisée en ce que** les unités de commande et d'affichage (6, 61, 62, 63) des machines de montage et/ou d'usinage (1'a, 1'b, 1'c, 1'd ; 11a, 11b, 11c, 11d) interconnectées sont disposées dans un plan vertical (E1, E2), **en ce qu'**un premier dispositif de transport (3a, 3d) d'une première machine de montage et/ou d'usinage (1'a, 11a) comprend une première bande transporteuse, **en ce qu'**un second dispositif de transport (3b, 3c) d'une seconde machine de montage et/ou d'usinage (1'b, 11b) comprend une seconde bande transporteuse et **en ce que** la première bande transporteuse et la seconde bande transporteuse se raccordent l'une à l'autre et sont conçues pour transporter l'au moins une pièce (20, 30) dans un plan horizontal.

8. Installation de production (100) comprenant au moins deux lignes de production (50, 51) selon la revendication 7 et au moins une allée de service (101), une ligne de production (50, 51) étant disposée de part et d'autre de chaque allée de service (101) et des premières unités de commande et d'affichage (61, 62, 63) d'une première ligne de production (50), disposées dans un premier plan vertical (E1), et d'autres unités de commande et d'affichage (61, 62, 63) d'une seconde ligne de production (51), disposées dans un autre plan vertical (E2), étant situées en regard les unes des autres.

9. Installation de production selon la revendication 8, **caractérisée en ce que** chaque allée de service (101) présente une largeur dans la plage de 0,75 à 1,5 m.
